Europäisches Patentamt

European Patent Office

Office européen des brevets

(19)

(11) Veröffentlichungsnummer: **0 060 371**
**B1**

(12) EUROPÄISCHE PATENTSCHRIFT

(45) Veröffentlichungstag der Patentschrift:
**22.05.85**

(21) Anmeldenummer: **81810104.0**

(22) Anmeldetag: **18.03.81**

(51) Int. Cl.⁴: **B 65 F 5/00,** B 65 G 63/02

(54) Kehrichtumladestation.

(43) Veröffentlichungstag der Anmeldung:
**22.09.82 Patentblatt 82/38**

(45) Bekanntmachung des Hinweises auf die Patenterteilung:
**22.05.85 Patentblatt 85/21**

(84) Benannte Vertragsstaaten:
**AT DE FR IT NL**

(56) Entgegenhaltungen:
**CH - A - 395 858**
**CH - A - 570 315**
**DE - A - 2 160 776**
**DE - A - 2 443 827**
**FR - A - 2 034 376**
**FR - A - 2 079 402**
**GB - A - 1 259 534**
**GB - A - 2 032 867**
**US - A - 3 973 685**

(73) Patentinhaber: **MOSER AG Fahrzeug- und Maschinenbau, Lyssachschachen, CH-3400 Burgdorf (CH)**

(72) Erfinder: **Flurl, Kurt, Kirchbühl 6, CH-3400 Burgdorf (CH)**
Erfinder: **Kaufmann, Beat, Dahlienweg 144b, CH-3426 Aefligen (CH)**

(74) Vertreter: **Steiner, Martin et al, c/o AMMANN PATENTANWAELTE AG BERN Schwarztorstrasse 31, CH-3001 Bern (CH)**

EP 0 060 371 B1

## Beschreibung

Die vorliegende Erfindung betrifft eine Kehrichtumladestation gemäss Oberbegriff des Anspruchs 1. Bei einer bekannten Umladestation dieser Art werden die Container auf einer geeigneten Bahn längs der Rampe herangeschoben und gefüllte Container werden längs der Rampe entfernt und dort verladen (FR-A-2 034 376). Diese Umladestation weist unterhalb der Entladerampe für die Sammelfahrzeuge mindestens eine Verdichtungsstation auf, aus welcher der Kehricht verdichtet durch die Öffnung an der Rückseite eines Containers eingeschoben wird. Es ist also nicht möglich, den Kehricht von der Entladerampe direkt in mit einer Längsseite an dieselbe gestallte Container zu entleeren. Die Container verbleiben während des Einstopfens des Kehrichts auf ihren Transportwagen, was besondere Massnahmen zur Aufnahme der auf die Container wirkenden Schubkräfte erfordert. Es ist kein rationeller Verkehr innerhalb der Station zwischen in Bereitschaft stehenden Containern und vollen Containern möglich.

Ziel vorliegender Erfindung ist es, eine Kehrichtumladestation zu schaffen, bei welcher der Kehricht direkt von der Rampe in längs derselben aufgestellte Container entleert werden kann, in welchen er direkt mit hoher Druckkraft verdichtet werden kann, und den Verkehr der vollen und leeren Container besonders rationell zu gestalten. Dieses Ziel wird gemäss Kennzeichen des Anspruchs 1 erreicht. Da die Container mittels des Querwagens an die Entladerampe herangeführt und dort auf feste Auflager gestellt werden, kann Kehricht direkt eingefüllt und von oben mittels einer Presse in den Containern verdichtet und verteilt werden. Die festen Auflager nehmen das erhebliche Gewicht der vollen Container und die Verdichtungsdrücke mühelos auf, und eine Verschiebung der Container unter dem von oben wirkenden Verdichtungsdruck ist unmöglich. Mittels des Längs- und Querwagens können Container rasch zwischen den Füllstellen, den Reservestellen auf der anderen Seite des Längsgleises und den Übergabestellen verschoben werden. Die Übergabestellen sind mit besonderen Hebemitteln versehen, welche die Übernahme bzw. Übergabe von Containern sowohl von Transportfahrzeugen als auch vom Querwagen bzw. auf dieselben gestatten.

Die Erfindung wird nun anhand eines in der Zeichnung dargestellten Ausführungsbeispiels näher erläutert.

Figur 1 zeigt eine Draufsicht auf die Kehrichtumladestation,

Figur 2 ist ein Schnitt nach Linie II/II in Figur 1 in etwas grösserem Massstab,

Figur 3 ist ein Teilschnitt nach Linie III/III in Figur 1,

Figur 4 ist ein Schnitt nach Linie IV/IV in Figur 3,

Figur 5 ist eine vergrösserte Seitenansicht des Längswagens und eine Teil-Stirnansicht des Querwagens und

Figur 6 ist eine Seitenansicht des Querwagens.

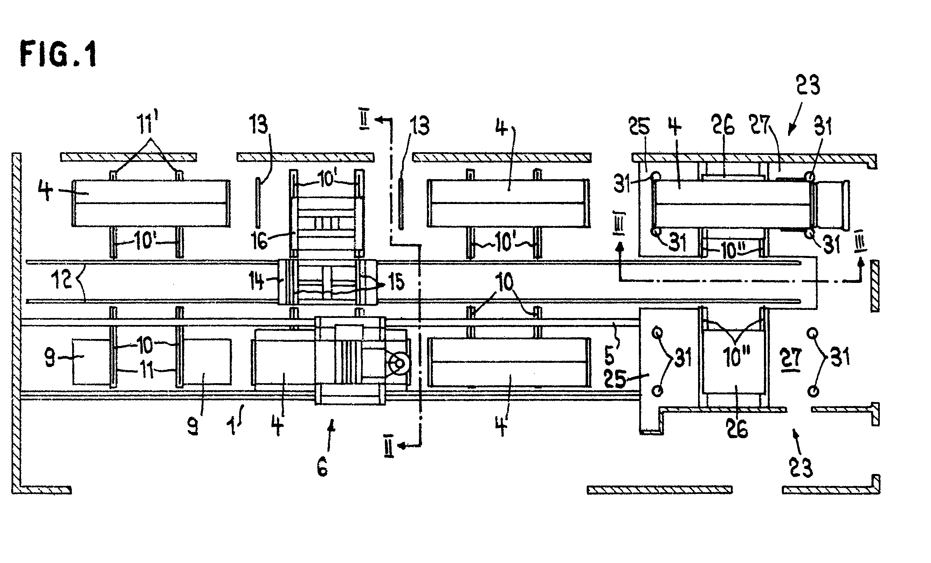

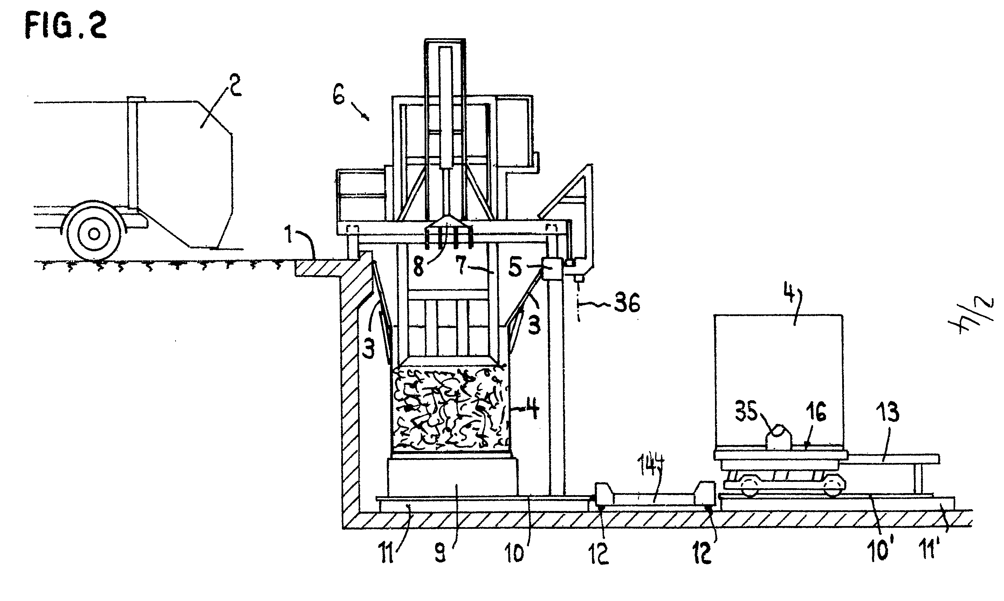

Die Figuren 1 und 2 zeigen die allgemeine Disposition der Kehrichtumladestation. An eine Rampe 1 der Station können Kehrichtsammelfahrzeuge 2 rückwärts heranfahren und den Kehricht in Container 4 entleeren, die unter der Rampe 1 bereitgestellt sind. Wie Figur 1 zeigt, können längs der Rampe 1 drei Container gleichzeitig aufgestellt werden. Wie Figur 2 zeigt, liegen die offenen Deckel 3 eines bereitstehenden Containers 4 einerseits an der Rampe 1 anderseits an einem zur Rampe 1 parallelen Längsbalken 5 an. Die offenen Deckel bilden somit gewissermassen einen Trichter welcher das aus einem Kehrichtsammelfahrzeug ausgestossene Gut in den Container 4 leitet. Längs der Rampe ist eine Maschine 6 zum Verdichten und Verteilen des in die Container entleerten Kehrichts vorgesehen. Diese Maschine ist nicht Gegenstand des Patentes und soll daher nur generell erläutert werden. Sie weist einen Stössel 7 auf, welcher zum Verdichten des Kehrichts in einem Container 4 abgesenkt werden kann. Ferner ist ein Greifer 8 vorgesehen mittels welches Kehricht aus einem überfüllten Container entnommen und in einen nächsten Container gebracht werden kann, welcher noch nicht gefüllt ist. Die an der Rampe 1 stehenden Container 4 stehen auf je zwei als Sockel gebildeten Auflagern (9), die seitlich von je einem rechtwinklig zur Längsrichtung der Rampe verlaufenden Geleise 10 angeordnet sind. Die Quergeleise 10 sind, wie Figur 2 zeigt, auf einem Sockel 11 montiert und liegen in bestimmter Höhe über einem parallel zur Rampe 1 verlaufenden Längsgeleise 12. Mit den Quergeleisen fluchtend sind ausserhalb des Längsgeleises 12 weitere Quergeleise 10' auf einem Sockel 11' in gleicher Höhe wie die Geleise 10 angeordnet. Seitlich jedes Geleises 10' sind ortsfeste als Böcke gebildete Auflager (13) zum Abstützen je eines Containers angebracht.

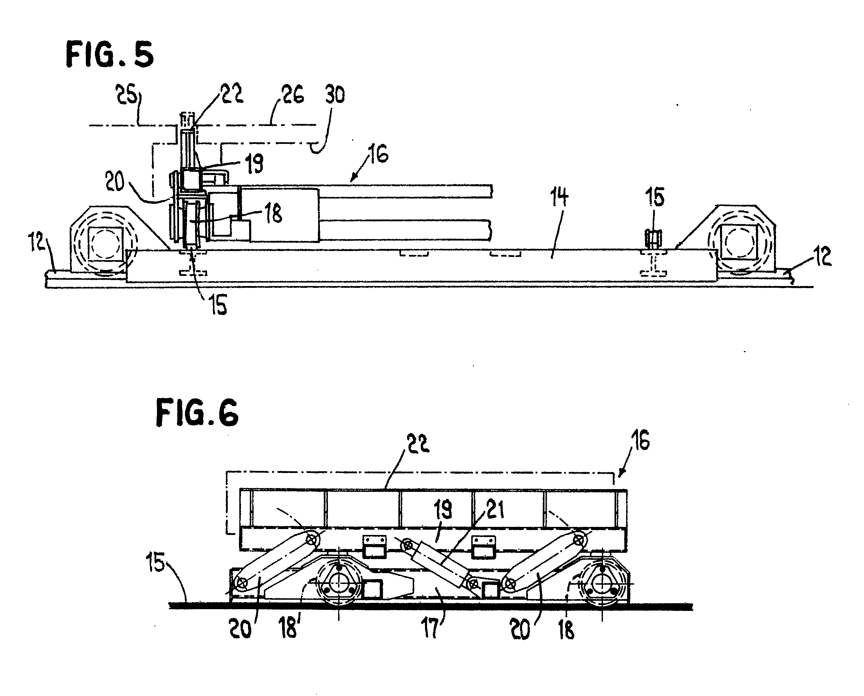

Auf dem Längsgeleise 12 ist ein Längswagen 14 fahrbar, welcher ein aus zwei Schienen bestehendes Quergeleise 15 aufweist. Dieser Längswagen 14 ist in Figur 5 in grösserem Massstab dargestellt. Das Quergeleise 15 des Längswagens 14 hat die gleiche Spurweite wie die Quergeleise 10 und 10'. Ein Querwagen 16, der in den Figuren 1 und 2 auf dem mittleren Quergeleise 10' dargestellt ist, kann somit von den Quergeleisen 10 und 10' auf den Längswagen 14 gefahren und mit demselben in Längsrichtung verschoben werden, oder er kann vom Längswagen auf eines der Quergeleise 10 oder 10' verschoben werden. Wie die Figuren 5 und 6 ausführlicher zeigen, weist der Querwagen 16 ein eigentliches Fahrgestell 17 mit den Rädern 18 und eine gegenüber diesem Fahrgestell höhenverstellbare Bühne 19 auf. Zwischen dem Fahrgestell 17 und der Bühne 19 sind vier Parallelogrammarme 20 angeordnet, und durch Verschwenkung dieser Parallelogrammarme kann die Bühne 19 aus der in Figur 6 dargestellten unteren Endlage in eine obere durch strichpunktierte Linien angedeutete Endlage gebracht werden. Das Heben und Senken der Bühne 19 erfolgt über einen Hubzylinder 21. Die Bühne 19 weist zwei seitliche schmale Stützen 22 auf, welche in später beschriebener Weise zum Erfassen und Anheben eines Containers dienen.

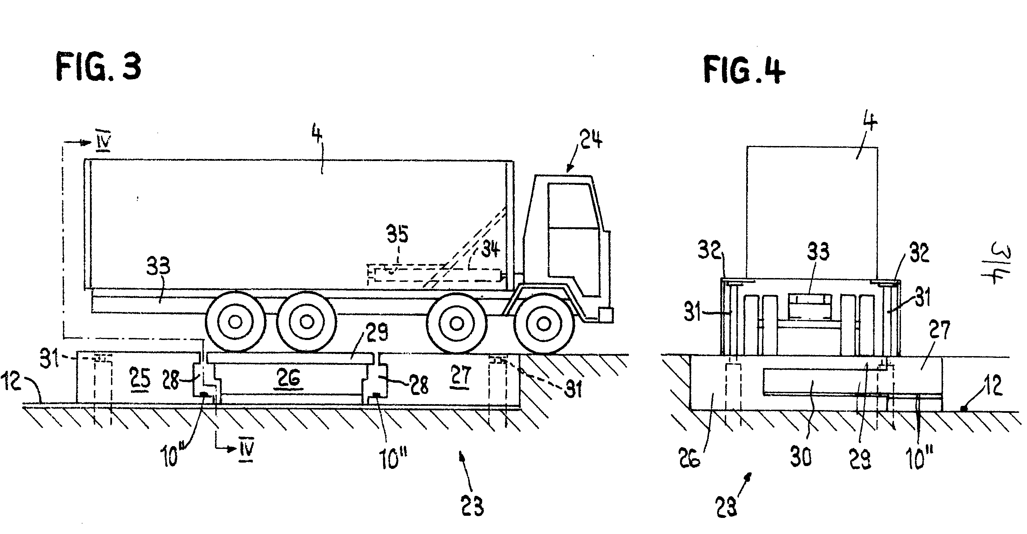

Die Umladestation weist zwei Übergabestellen 23 auf, in welchen Container auf Strassentransportfahrzeuge verladen oder von diesen entladen werden können. Eine dieser Übergabestellen ist in den Figuren 3 und 4 in grösserem Massstab dargestellt. Wie insbesondere Figur 3 zeigt, ist in diesen Übergabestellen eine Fahrbahn für das Transportfahrzeug 24 gebildet, welche Fahrbahn drei Teile 25, 26 und 27 aufweist, zwischen welchen Schlitze oder Nutzen 28 gebildet sind. Am Grund dieser Nuten ist ein Quergeleise 10″ montiert auf welchem der Querwagen 16 unter die Fahrbahn fahren kann. Zu diesem Zweck ist der Mittelteil 26 U-förmig mit einer oberen tragenden Platte 29 und einem darunter liegenden Hohlraum 30 ausgebildet. In diesen Hohlraum kann der Querwagen 16 einfahren wobei seine Stützen 22 durch die obere engste Stelle der Schlitze oder Nuten 28 durchtreten kann wie in Figur 5 angedeutet ist. An jeder Übergabestelle 23 sind vier Hubzylinder 31 angeordnet, welche je einen in Figur 4 dargestellten Hubwinkel 32 anzuheben gestatten um einen Container 4 in der in Figur 4 dargestellten Art zu erfassen und anzuheben. Der Hub der Zylinder 31 und der Winkel 32 und deren gegenseitiger Abstand sind so bemessen, dass die Ladebrücke 33 des Trasportfahrzeuges 24 unter die angehobenen Teile 31 und 32 sowie einen darauf abgestützten Container 4 einfahren kann.

Wie Figur 3 andeutet ist über dem vorderen Ende der Ladebrücke 33 des Transportfahrzeuges 24 ein Ausstosszylinder 34 angeordnet. Am vorderen Ende des Bodens jedes Containers 4 ist eine Ausnehmung 35 vorgesehen welche auch in Figur 2 ersichtlich ist, in welche der Ausstoszylinder 34 beim Aufsetzen des Containers auf das Transportfahrzeug eindringen kann. Das hintere Ende des Ausstosszylinders 34 greift hinter einen nicht dargestellten Mitnehmer einer Ausstosswand des Containers 4. Zum Ausstossen des Kehrichts an seinem Bestimmungsort kann nun mittels des Ausstosszylinders des Transportfahrzeugs 24 die Ausstosswand des Containers 4 nach hinten verschoben werden, um den geladenen Kehricht durch die geöffnete Hinterseite des Containers auszustossen.

Die dargestellte Umladestation gestattet eine rationelle Organisation des Umladebetriebes mit bescheidenem technischen Aufwand und geringem Raumbedarf. Zur Übernahme eines leeren Containers 4 vom Transportfahrzeug 24, beispielsweise des Containers vom Transportfahrzeug in Fig. 1 rechts oben, wird dieser Container mittels der Zylinder 31 und der Hubwinkel 32 der betreffenden Übernahmestelle in die in Figur 4 dargestellte Lage vom Transportfahrzeug angehoben. Das Transportfahrzeug fährt dann weg. Sodann wird der Längswagen mit dem Querwagen zwischen die beiden Übergabestellen verschoben, worauf der Querwagen in den Hohlraum 30 eingefahren wird, wobei seine Stützen 22 in die Schlitze 28 eintreten. Wenn es nicht schon vorher geschehen ist, werden nun die Stützen 22 mit der Bühne 19 in die in Figur 5 strichpunktiert angedeutete obere Lage gebracht, in welcher sie über die Fahrbahn emporragen. Der Querwagen ist damit bereit zur Übernahme des Containers, welcher mittels der Zylinder 31 und der Winkel 32 abgesenkt wird, bis er auf die Stützen 22 des Querwagens auftrifft. Die Winkel 32 gehen nun noch weiter nach unten und geben den Container frei. Der Querwagen kann nun zusammen mit dem übernommenen Container wieder auf den Längswagen gefahren werden, mittels welches er dann an die gewünschte Stelle verschoben wird. Er kann beispielsweise in die noch freie mittlere Reservestelle gefahren werden und dort durch Absenken der Bühne 19 auf die ortsfesten als Stützen gebildeten Auflager (13) abgestellt werden. Nun kann der Querwagen benützt werden um einen vollen Container, beispielsweise den in Figur 1 rechts unten an der Rampe 1 stehenden Container 4 zu übernehmen. Zu diesem Zwecke wird der Querwagen vor das unter dem betreffenden Container liegende Quergeleise 10 gefahren, worauf der Querwagen über dieses Geleise unter den Container gefahren wird. Die Bühne 19 wird nun angehoben um den Container zu erfassen, dann wird der Querwagen mit dem Container wieder auf den Längswagen 14 gerollt und dieser zusammen mit dem Querwagen und dem Container wird in Figur 1 nach rechts, zwischen die beiden Übergabestellen 23 gefahren. Dann wird der Querwagen in die eine dieser Übergabestellen eingefahren, wie oben beschrieben, beispielsweise in die obere Stelle 23. Die Bühne 19 ist noch angehoben von der Übernahme des Containers her, sodass der Container auf den Stützen 22 in einem gewissen Abstand über der Fahrbahn und den Hubwinkeln 32 bzw. Hubzylindern 31 eingefahren wird. Die Bühne des Querwagens kann nun abgesenkt werden, um den Querwagen bereits wieder herauszufahren und für eine andere Transportaufgabe zu verwenden, wodurch der Container auf die Hubwinkel 32 abgestellt wird. Dann werden die Hubzylinder 31 betätigt um den Container in die in Figur 4 dargestellte Lage anzuheben. Hierauf kann das Transportfahrzeug 24 unter den Container fahren um denselben zu übernehmen, sobald die Hubzylinder 31 und Hubwinkel 32 abgesenkt werden. Das Transportfahrzeug kann hierauf mit dem Container wegfahren. Die Umladestation bietet erhebliche Freiheit in der Organisation des Arbeitsablaufes, was wiederum eine optimale Ausnützung der Transportkapazität des oder der Transportfahrzeuge 24 ergibt. Man könnte beispielsweise in der dargestellten Umladestation bis zu 7 Containern zwischen den einzelnen Füllstellen an der Rampe 1, den Reservestellen gegenüber diesen Füllstellen und den Übergabestellen verschieben, um so verfügbare leere Container zu füllen, ohne dass ein Abtransport von Containern erforderlich ist. Es liegt also eine erhebliche Lagerkapazität bzw. Reservekapazität vor.

Die Energieversorgung und Steuerung der beiden Wagen 14 und 16 erfolgt über ein vorhangartig längs des Balkens 5 ausziehbares Kabel 36, welches in Figur 2 angedeutet ist und welches mit dem Längswagen 14 verbunden ist. Vom Längswagen 14 aus erfolgt die Energieversorgung und Steuerung des Querwagens 16 über ein flexibles Kabel, was insofern keine Schwierigkeiten bietet, als ohnehin der Längswagen nie in Längsrichtung gegenüber dem Querwagen verschoben wird, d.h. es findet immer nur eine Längsverschiebung der beiden Wagen zusammen statt. Die genauen Positionen können hierbei durch Anschläge bestimmt sein.

Es ist natürlich eine andere grundsätzliche Gestaltung der Umladestation möglich. Es können mehr oder weniger Stellen jeder Art vorgesehen sein. Da die Reservekapazität der Umladestation erheblich ist, könnte man beispielsweise mit einer einzigen Übergabestelle 23 auskommen.

**Patentansprüche**

1. Kehrichtumladestation mit längs einer Entladerampe (1) für Kehrichtsammelfahrzeuge abstellbaren Containern (4) und mindestens einer Übergabestelle (23) zum Verladen und Entladen der Container (4) auf bzw. von Transportfahrzeugen (24), wobei parallel zur Rampe (1) ein Längsgeleise (12) für einen Längswagen (14) verläuft, dadurch gekennzeichnet, dass ein Querwagen (16) zur Aufnahme von Containern (4) auf quer zur Rampe (1) verlaufenden ortsfesten Quergeleisen (10) und auf Querschienen (15) des Längswagens (14) verfahrbar ist, dass die Container (4) länger sind als der Querwagen (16) und beim Transport auf demselben in Längsrichtung beidseitig desselben vorstehen, dass der Querwagen eine heb- und senkbare Bühne (19) zur Aufnahme von Containern (4) von ortsfesten Auflagern (13) an der Entladerampe (1) aufweist, und dass in der Übergabestelle eine Hebevorrichtung (31, 32) vorgesehen ist, welche sowohl vom Querwagen (16) als auch vom Transportfahrzeug einen Container anzuheben und einen Container auf das Transportfahrzeug oder den Querwagen abzustellen gestattet.

2. Station nach Anspruch 1, dadurch gekennzeichnet, dass beidseitig des Längsgeleises (12) Quergeleise (10, 10') angeordnet sind, die einerseits zur Entladerampe (1) und anderseits zu Reservestellen führen.

3. Station nach Anspruch 1 oder 2, dadurch gekennzeichnet, dass an der Übergabestelle (23) das Quergeleise (10'') unter einer Fahrbahn (25–27) für Transportfahrzeuge (24) hindurch verläuft, in welcher Fahrbahn zum Quergeleise (10'') parallele Schlitze (28) vorgesehen sind, dass die Bühne (19) des Querwagens (16) in die Schlitze (28) einführbare schmale Stützen (22) für Container (4) aufweist und dass unter der Fahrbahn ein Hohlraum (30) zur Aufnahme eines Querwagens (16) vorgesehen ist.

4. Station nach irgendeinem der Ansprüche 1–3, dadurch gekennzeichnet, dass die Steuerung und Energieversorgung über ein längs des Längsgeleises (12) bewegliches Kabel (36) auf den Längswagen (14) und von dort über ein Kabel zum Querwagen (16) erfolgt.

**Revendications**

1. Station de transbordement d'immondices avec des containers (4) susceptibles d'être garés le long d'une rampe de décharge (1) pour des véhicules collecteurs d'immondices et au moins une place de transfert (23) pour le chargement et le déchargement des containers (4) sur, respectivement à partir des véhicules de transport (24), une voie longitudinale (12) s'étendant parallèlement à la rampe (1) étant prévue pour un chariot longitudinal (14), caractérisée en ce qu'un chariot transversal (16) pour la réception de containers (4) est déplaçable sur des voies transversales stationnaires (10) s'étendant transversalement à la rampe (1) et sur les rails transversaux (15) du chariot longitudinal (14), en ce que les containers (4) sont plus longs que le chariot transversal (16) et que lors du transport, ils dépassent des deux côtés de celui-ci en direction longitudinale, en ce que le chariot transversal comprend une plateform montante et descendante (19) pour la réception de containers (4) à partir de supports stationnaires (13) de la rampe de décharge (1) et en ce qu'un dispositif de levage (31, 32) est prévu à la place de transfert pour permettre de lever un container à partir du chariot transversal (16) ou du véhicule de transport et de déposer un container sur le véhicule de tranort ou sur le chariot transversal.

2. Station selon la revendication 1, caractérisée en ce que des voies transversales (10, 10') conduisant d'une part à la rampe de décharge (1) et d'autre part à des places de réserve sont disposées des deux côtés de la voie longitudinale (12).

3. Station selon la revendication 1 ou 2, caractérisée en ce qu'à la place de transfert (23), la voie transversale (10'') passe sous une piste de roulement (25–27) pour des véhicules de transport (24), des fentes (28) parallèles à la voie transversale (10'') étant prévues dans la piste de roulement, en ce que la plateforme (19) du chariot transversal (16) comprend des supports étroits (22) de containers (4) susceptibles de s'introduire dans les fentes (28) et en ce qu'un espace vide (30) pour la réception d'un chariot transversal (16) est prévu sous la piste de roulement.

4. Station selon l'une quelconque des revendications 1–3, caractérisée en ce que la commande et l'alimentation en énergie est réalisée par un câble mobile (36) s'étendant le long de la voie longitudinale (12) jusqu'au chariot longitudinal (14) et à partir de là jusqu'au chariot transversal (16).

**Claims**

1. Refuse transfer station with containers (4) to be garaged along an unloading ramp (1) for refuse collecting vehicles and at least a place of transfer (23) for the loading and unloading of the containers (4) on, respectively from transport vehicles (24), a longitudinal track (12) extending in parallel with the ramp (1) being provided for a longitudinal carriage (14), characterized in that a transverse carriage (16) for acceptance of containers (4) is travelling on stationary transverse tracks (10) extending transversally to the ramp (1) and on transverse rails (15) of the longitudinal carriage (14), in that the containers (4) are longer than the transverse carriage (16) so that during transport, they project on both sides of the latter in the longitudinal direction, in that the transverse carriage comprises a lifting and sinking platform (19) for acceptance of containers from stationary supports (13) of the unloading ramp (1) and in that a lifting device (31, 32) is provided at the place of transfer for permitting to lift a container from the transverse carriage (16) or from the transport vehicle and to put down a container on the transport vehicle or on the transverse carriage.

2. Station according to claim 1, characterized in that transverse tracks (10, 10') leading on the hand to the unloading ramp (1) and on the other hand to reserve places are arranged on both sides of the longitudinal track (2).

3. Station according to claim 1 or 2, characterized in that at the place of transfer (23), the transverse track (10") runs under a roller-track (25–27) for transport vehicles (24), slits (28) parallel to the transverse track (10") being provided in the roller-track, in that the platform (19) of the transverse carriage (16) comprises narrow supports (22) of containers (4) capable to be introduced in the slits (28) and in that a hollow space (30) for receiving a transverse carriage (16) is provided under the roller-track.

4. Station according to one of the claims 1–3, characterized in that the control and supply of energy is achieved by a movable cable (36) extending along the longitudinal track (12) up to the longitudinal carriage (14) and from there over a cable up to the transverse carriage (16).

FIG.1

FIG.2

2

6

1

8    7    5

36

3    3

3

4

35   16    4

13

11   9   10   12   14   12   10'  11'

0 060 371

FIG. 3

FIG. 4

0 060 371

FIG. 5

FIG.6